**Europäisches Patentamt**

(19) **European Patent Office**

**Office européen des brevets**

(11) Numéro de publication: **0 037 331**
**A2**

(12) # DEMANDE DE BREVET EUROPEEN

(21) Numéro de dépôt: **81400485.9**

(51) Int. Cl.³: **G 01 K 17/06**

(22) Date de dépôt: **27.03.81**

(30) Priorité: **27.03.80 FR 8006863**
**27.06.80 FR 8014399**

(43) Date de publication de la demande:
**07.10.81 Bulletin 81/40**

(84) Etats contractants désignés:
**AT BE CH DE GB IT LI LU NL SE**

(71) Demandeur: **Somesca**
**12, avenue du Général de Gaulle**
**F-92250 La Garenne Colombes(FR)**

(71) Demandeur: **Fisch, Raymond Frédéric**
**11, rue de Lubeck**
**F-75016 Paris(FR)**

(71) Demandeur: **Fisch, Olivier Jacques**
**39/41, boulevard Suchet**
**F-75016 Paris(FR)**

(72) Inventeur: **Fisch, Raymond Frédéric**
**11, rue de Lubeck**
**F-75016 Paris(FR)**

(72) Inventeur: **Fisch, Olivier Jacques**
**39/41, boulevard Suchet**
**F-75016 Paris(FR)**

(54) **Répartiteur de chaleur par appartement avec ou sans report à distance des mesures.**

(57) L'invention concerne un appareil servant à la détermination des charges incombant à chaque usager d'une chaufferie collective avec report à distance. Le compteur de coulombs 1 est concrétisé par un appareil à mercure selon le principe des électrodes solubles.

Pour chaque appartement, un seul compteur de coulombs est utilisé pour faire la répartition des charges de chauffage. Celui-ci peut alors se situer à l'extérieur de l'appartement, facilitant ainsi le relevé. Les radiateurs sont pourvus de capteurs (circuits intégrés) 7.

Un amplificateur 3 pondère en fonction de la surface d'émission calorifique des radiateurs les tensions fournies par ces capteurs et les somme. Un seuil de température minimum permet de bloquer le système ceci pour éviter un comptage sur chaque radiateur en dessous d'une température déterminée.

La liaison entre capteurs et coulomètre est faite à l'aide de câbles téléphoniques et connections wrappées.

L'alimentation en tension de ce système peut être faite par piles ou accus et c hargeur ou secteur – ceci individuellement ou mieux centralisée.
FIGURE ANNEXEE
*EN VARIANTE*

Il est prévu un appareil sans report à distance des mesures. Sur chaque radiateur est installé un répartiteur constitué par le compteur de coulombs est les dispositifs de mesure de température, d'alimentation et d'amplification ; la lecture des mesures est ainsi faite sur chaque radiateur.

EP 0 037 331 A2

COMPLETE DOCUMENT

REPARTITEUR DE CHALEUR PAR APPARTEMENT AVEC OU SANS REPORT A DISTANCE DES MESURES.

L'invention concerne un appareil servant à déterminer les charges de chauffage incombant à chaque usager d'une chaufferie collective, avec ou sans report à distance des mesures.

Dans les immeubles dont le chauffage est assuré par des radiateurs, il est utilisé des répartiteurs pour déterminer les charges incombant aux diverses parties prenantes.

Les appareils de beaucoup les plus utilisés jusqu'à présent sont placés sur tous les radiateurs et constitués essentiellement par un tube en verre vertical, fermé à son extrémité inférieure, ouvert à son extrémité supérieure et contenant un liquide dont on relève la hauteur évaporée, cette évaporation correspondant approximativement à l'intégration dans le temps de la température du radiateur à chaque instant, un facteur multiplicateur ou une échelle appropriée tenant évidemment compte de la surface du radiateur intéressé.

Ces appareils ont l'avantage d'être peu coûteux, mais ils ont, par contre, divers inconvénients dont les plus importants sont les suivants :
- le liquide s'évapore à la température ambiante.
Ce phénomène est particulièrement regrettable dans la période actuelle des économies d'énergie en raison de la coupure du chauffage la nuit ou par temps doux, et en raison, aussi, de l'abaissement des températures pratiquées. De plus, il varie selon que les évaporateurs sont plus ou moins exposés au soleil.
- échelles non linéaires, resserrées vers le bas, compliquant les lectures dans la partie utile, l'évaporation se ralentissant avec la baisse du liquide.
- possibilité de fraudes par l'introduction de corps étrangers, de gaz plus particulièrement, ralentissant considérablement l'évaporation.
- nécessité de pénétrer dans les appartements pour effectuer les prestations de relevés et d'entretien.

Tous ces inconvénients donnant lieu à de regrettables contestations avec les usagers et accroissant les difficultés des répartitions.

Le répartiteur avec report à distance, objet de la présente invention, remédie à ces inconvénients.
Il comporte :
       - un compteur de coulombs

— des circuits intégrés, des résistances et des condensateurs et des circuits intégrés capteurs de température qui assurent le fonctionnement au-delà d'une température prédéterminée, par exemple, la température minimum de fonctionnement des radiateurs.

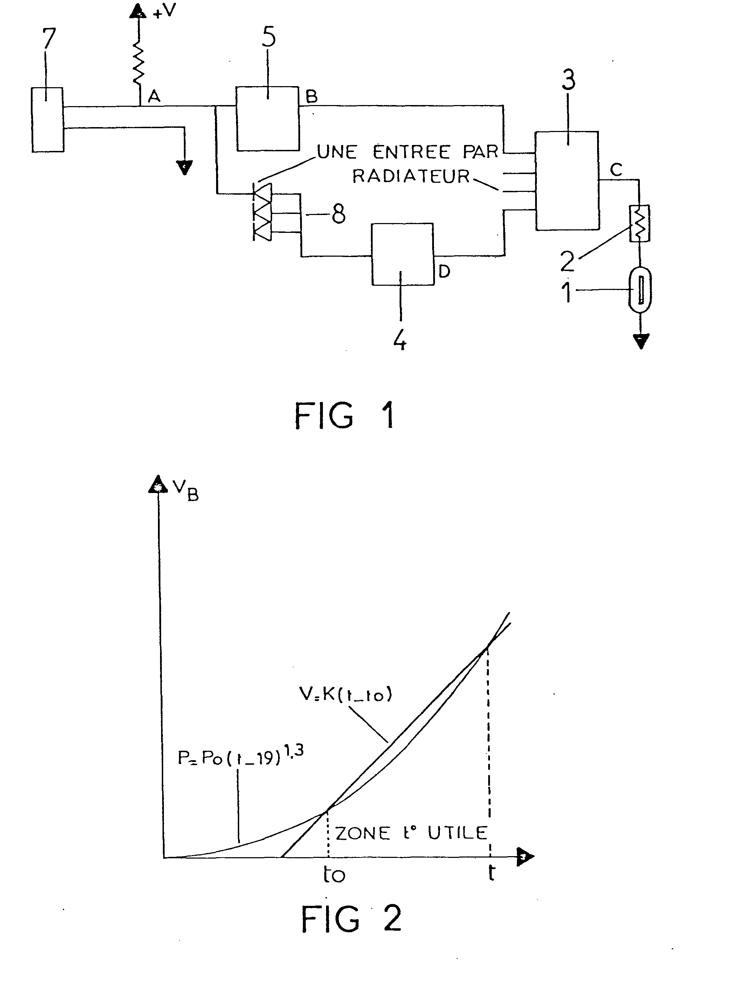

La figure 1 ci-après en précise le fonctionnement.

Le compteur de coulombs 1, basé sur les Lois de Faraday, peut-être, par exemple, constitué par un appareil suivant le principe de l'électrolyse à électrodes solubles.

Dans cet appareil une colonne de mercure s'allonge proportionnellement et linéairement au produit du courant qui le traverse par le temps pendant lequel le courant circule.

Le courant est fourni par une alimentation autonome (ou une alimentation secteur) qui débite sur le circuit représenté sur la figure 1 :

Sur chaque radiateur, un dispositif à semi conducteur 7 mesure la température et délivre une tension proportionnelle à la valeur t de celle-ci au point de référence A. Le dispositif électronique 5 traite cette donnée et délivre au point de référence B une tension proportionnelle à t diminuée de la constante to et toujours positive ou nulle

$$V_B = K \ (t - to) \ \text{et} \ V_B \geqslant 0$$

to étant déterminée pour assurer la non prise en compte par le système d'échauffement du radiateur dû à des causes externes ou correspondant à des coefficients de rayonnement très faibles,

K étant déterminée de manière à ce que la droite $V_B = K (t - to)$ constitue dans la pratique une bonne approximation du rayonnement thermique du radiateur en fonction de sa température qui est de la forme

$$P = Po \ (t - to) \alpha$$

t étant la valeur de la température ambiante que l'on considèrera comme égale à 19° et $\alpha$ un coefficient dont la valeur est de l'ordre de 1,3 (voir figure n° 2).

$V_B$ constitue dans ces conditions une bonne représentation de la puissance d'émission du radiateur dans sa zone de température pratique d'utilisation.

Le dispositif électronique 3 reçoit les tensions $V = K (t - to)$ en provenance de chacun des radiateurs d'un logement et effectue leur somme après avoir multiplié chacun de ces signaux par un coefficient qui est proportionnel à la surface du radiateur considéré. Une tension continue proportionnelle à cette somme pondérée est délivrée au point référence C, elle représente la valeur du rayonnement thermique instantané de l'ensemble de l'installation relative à ce logement.

Cette tension appliquée au coulomètre 1 à travers la résistance 2 qui fixe le facteur d'échelle est intégrée dans le temps et entraine un déplacement de l'index du coulomètre proportionnel à l'émission totale de l'installation de chauffage depuis la dernière remise à zéro.

Un dispositif anti-fraude est intégré au système. Il provoque en cas de coupure de la liaison entre le capteur de température 7 et le point A le remplacement du signal du capteur 7 par la prise en compte par le dispositif de la tension d'alimentation + V à travers la résistance 6 ce qui entraine l'apparition d'un signal $V_B$ très supérieur à la normale et une mesure par excès.

Il provoque en cas de mise à la masse de la liaison entre le dispositif 7 et le point d'un quelconque radiateur la détection par le détecteur de niveau 4 associé aux diodes 8 de cette anomalie et l'apparition d'une tension positive au point référencé D normalement à un potentiel nul. Cette tension, prise en compte par le dispositif 3 assure en C, la présence d'un potentiel qui provoque le déplacement du curseur du coulomètre et une mesure finale par excès.

Le relevé de la quantité d'électricité ayant traversé le coulomètre sera fait en tirant avantage de la réversibilité de ce dispositif qui exige pour sa remise à zéro exactement la même quantité d'électricité (mais appliquée avec une polarité inverse) que celle qui a été nécessaire pour au préalable déplacer l'index depuis le zéro.

Pratiquement, ces divers éléments sont disposés de la manière suivante :

- les capteurs de température 7 avec leurs éléments de calibrage éventuels sont disposés sur les surfaces d'émission

- les autres éléments références 1, 2, 3, 4, 5, 6 et 8 sont disposés dans un coffret situé sur le palier des logements correspondants ou dans un logement convenable.

- les liaisons entre ce coffret et les capteurs de température sont réalisées par des câbles bifilaires torsadés ou blindés (câbles téléphoniques par exemple) de connexions et de boites de dérivation convenables.

Tous les capteurs de température sont analogues et des dispositifs convenables pondèrent les tensions en fonction des surfaces d'émission des radiateurs, ainsi la chaleur émise pendant la saison de chauffage répond à l'allongement de la colonne de mercure du compteur de coulombs.

Ce répartiteur de chaleur peut-être aussi réalisé en appareil individuel fixé sur chaque radiateur. Il regroupe le compteur de coulombs, la sonde sur radiateur, l'amplification et l'alimentation. La lecture des mesures est donc faite sur chaque répartiteur.

-REVENDICATIONS-

1) Appareil servant à la détermination des charges de chauffage incombant à chaque usager d'une chaufferie collective, avec report à distance de la lecture des mesures.
Cet appareil est caractérisé par l'utilisation simultanée d'un compteur de coulombs relié à des circuits intégrés capteurs de température arrêtant le comptage pour une température déterminée.

2) Appareil selon la revendication 1 caractérisé par le fait qu'est installé sur chaque radiateur un répartiteur constitué par le compteur de coulombs et les dispositifs de mesure de température, d'alimentation et d'implantation ; la lecture des mesures est ainsi faite sur chaque radiateur.

FIG 1

FIG 2